# EUROPÄISCHE PATENTSCHRIFT

(11) **EP 1 288 419 B1**
(45) Veröffentlichungstag und Bekanntmachung des Hinweises auf die Patenterteilung: **23.01.2013**
(21) Anmeldenummer: 02018949.4
(22) Anmeldetag: 26.08.2002
(51) Int. Cl.: E05F 3/10, F16H 55/26

(54) **Verfahren zur Herstellung einer Verzahnung für ein Getriebe und ein Türschliesser mit nach dem Verfahren hergestellten Teilen**
Manufacturing method of a toothing for an actuator and door closer with elements made following the method
Méthode de fabrication d'une denture d'entraînement et ferme-porte avec éléments fabriqués selon cette méthode

(30) Priorität: 31.08.2001 DE 10142756
(43) Veröffentlichungstag der Anmeldung: 05.03.2003
(73) Patentinhaber: GEZE GmbH, 71229 Leonberg (DE)
(72) Erfinder: Hermann, Alber, 70192 Stuttgart (DE); Feucht, Rudi, 71287 Weissach (DE); Thielen, Klaus, 83471 Schöngau (DE)

(56) Entgegenhaltungen:
- EP-A- 0 740 735
- FR-A- 2 381 948
- US-A- 4 019 220

## Beschreibung

Die Erfindung betrifft ein Verfahren zur Herstellung einer Verzahnung für ein Getriebe nach dem Oberbegriff des Anspruchs 1, sowie einen mit dem Verfahren hergestellten Türschließer.

Aus der EP 0 740 735 B1 ist ein Türschließer mit einem in einem Gehäuse geführten und über ein Getriebe gegen eine Rückstellkraft verschiebbaren Schließerkolben, und mit einem in dem Türschließergehäuse mit dem Schließerkolben gleichsinnig verschobenen Dämpfungskolben aus Kunststoff, bekannt. Dabei weist das Getriebe ein mit der Welle des Türschließers drehfest verbundenes Ritzel auf, das an seiner Verzahnung in einer Gegenverzahnung kämmt, über welche der Dämpfungskolben und der Schließerkolben miteinander in Verbindung stehen, wobei die Gegenverzahnung in Richtung ihrer Verschiebung geteilt ist und wenigstens ein Teil der Gegenverzahnung aus Metall und wenigstens ein Teil aus Kunststoff besteht. Der Dämpfungskolben, der Schließerkolben und die Gegenverzahnung bilden zusammen den Kolben des Türschließers. Die Gegenverzahnung ist in Richtung ihrer Verschiebung geteilt und wenigstens ein Teil der Gegenverzahnung ist aus Metall und wenigstens ein Teil ist aus Kunststoff gefertigt.

Die Gegenverzahnung umfasst also zwei Metallteile mit dazwischen liegendem Kunststoff. Dabei bildet das zwischen den Metallteilen liegende Kunststoffteil mit dem Dämpfungskolben und dem Schließkolben in Gesamtheit ein Kunststoffspritzgussteil, wobei die Metallteile der Gegenverzahnung durch den Kunststoff umspritzt sind. Zur Befestigung der Metallteile im Kunststoff sind in deren seitlichen Aufkragungen Bohrungen eingebracht, durch welche beim Umspritzen Kunststoffmaterial dringt, und welches die Metallteile fixiert.

Für die Einleitung der Kräfte vom Ritzel auf den Kolben ist eine Metallverzahnung erforderlich, um die notwendige mechanische Festigkeit und Abnutzungsbeständigkeit zu erreichen.

Nachteilig bei dieser Konstruktion ist, dass zwei Metalleinlegeteile verwendet werden müssen, um die erforderliche Verzahnungsbreite und die Festigkeit der Verzahnung zu realisieren. Bei einem einstückigen Metalleinlegeteil könnte durch die Breite des Metalleinlegeteils kein ausreichender Materialfluss durch die Fixierungsbohrungen in den seitlichen Aufkragungen der Metallteile zustande kommen. Die Ausführung der Gegenverzahnung aus zwei Metallteilen mit dazwischenliegendem Kunststoffteil ist daher durch spritzgusstechnische Erfordernisse dieser Anordnung bedingt. Desweiteren könnte die Materialfestigkeit bei nur einem der lediglich aus Blech ausgestanzten Einlegeteile nicht ausreichend hoch sein um den durch das Ritzel übertragenen Kräften stand zu halten. Das Ausstanzverfahren quer zur Fläche des Metalleinlegeteils lässt nur eine gewisse Breite des Metalleinlegeteils zu.

In der US 4 019 220 A wird ein Türschließer gemäβ dem Oberbegriff des Anspruchs 1 gezeigt, mit einem Kolben aus leicht zu bearbeitendem Material, mit einem mit dem Kolben verbundenen Einsatz aus einem härteren, verschleißfesteren und druckfesteren Material zur Übertragung der Kräfte und der Bewegung des Kolbens. Dabei ist der aus einem Vollmaterial hergestellte Einsatz in eine Vertiefung des Kolbens eingelegt und durch drei Ansätze, die auf der Grundfläche der Vertiefung angeordnet sind, fixiert.

Die FR 2 381 948 zeigt einen aus zwei einander gegenüberliegend angeordneten Metallplatten und zwei Endkappen gebildeten Kolben für einen Türschließer. Die Metallplatten sind mit einer Verzahnung zum Eingriff eines Ritzels des Türschließers versehen. Die über die Verzahnung hinausgehenden Fortsätze der Metallplatten sind in den Endkappen aufgenommen und bilden so den Kolben aus.

Der Erfindung liegt die Aufgabe zugrunde, ein Verfahren zur möglichen Verwendung eines einstückigen Verzahnungseinsatzes in einem gespritzten oder gegossenen Kolben zu entwickeln, und einen Türschließer mit einem Getriebe nach diesem Verfahren herzustellen.

Die Aufgabe wird durch die Merkmale des Anspruchs 1 sowie in Anspruch 2 gelöst.

Die Unteransprüche bilden vorteilhafte Ausgestaltungsmöglichkeiten der Erfindung.

Mit einem einstückigen Verzahnungseinsatz können neben geraden Verzahnungen auch weitere, durch den erfindungsgemäßen Umformvorgang einfach herzustellende Verzahnungsarten in gespritzten oder gegossenen Kolben eingesetzt werden, beispielsweise mit unterschiedlichen Wälzkurven oder mit variierten Flankenwinkeln für Türschließer mit unterschiedlichem Momentenverlauf. Die Ausbildung der Verzahnung kann dabei unabhängig von spritzgusstechnischen Erfordernissen erfolgen. Für große Türen mit hohen erforderlichen Schließkräften ist darüber hinaus eine Ausbildung der Verzahnung in Metall über deren gesamte Breite zur Übertragung der großen Kräfte möglich. Es ist dadurch auch möglich neben der mechanischen Festigkeit eine hohe Abnutzungsbeständigkeit zu erreichen.

Im Nachfolgenden wird ein Ausführungsbeispiel in der Zeichnung anhand der Figuren näher erläutert.

Dabei zeigen:
- **Fig. 1**: einen herkömmlichen Türschließer in längsgeschnittener Darstellung;
- **Fig. 2**: einen Türschließerkolben mit umgeformter Verzahnung als Wälzkurve in geschnittener Darstellung;
- **Fig. 3**: einen Türschließerkolben mit umgeformtem Materialfortsatz der Verzahnung zur Stabilisierung des Kolbens in geschnittener Darstellung.

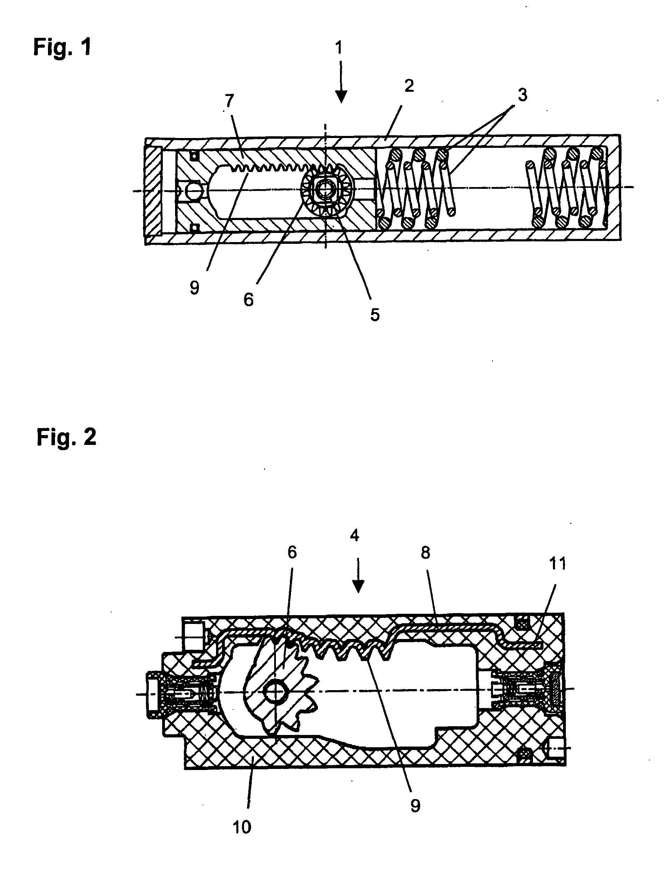

Fig. 1 zeigt einen herkömmlichen Türschließer 1 mit einem Gehäuse 2, mit im Gehäuse befindlichen Federn 3, die auf das Getriebe 4 einwirken und am Gehäuse 3 abgestützt sind.

Der Türschließer 1 ist an einer nicht weiter dargestellten Tür festgelegt und über ein drehfest mit der Welle 5 verbundenes, ebenfalls nicht dargestelltes Gestänge oder einen Gleitarm am Türrahmen abgestützt.

Das Getriebe 4 besteht aus einer Welle 5, welche ein außenverzahntes Ritzel 6 trägt und einen Kolben 7 mit einer axial in Verschiebungsrichtung ausgebildeten Verzahnung 9, in welcher das Ritzel 6 kämmt.

Beim Betätigen der Tür wird das Ritzel 6 über das Gestänge oder den Gleitarm in Drehung versetzt. Dadurch verschiebt sich der Kolben 7 axial gegen die Feder 3. Umgekehrt drückt die Feder 3 auf den Kolben 7 und verschiebt den Kolben 7 mit der Verzahnung 9, in welcher das Ritzel 6 kämmt, axial und versetzt dadurch die Welle 5 in Drehbewegung und führt die Tür über das Gestänge oder den Gleitarm in Geschlossenstellung zurück.

Zur Ausbildung der Verzahnung 9 für das Getriebe 4, das die Welle 5 mit dem außenverzahnten Ritzel 6 und den in axialer Verschiebungsrichtung verzahnten Kolben 7 umfasst, in dessen Verzahnung 9 das Ritzel 6 mit der Welle 5 korrespondiert, wird aus einem flächigen Teil durch einen in Richtung auf die Fläche wirkenden Umformvorgang ein Verzahnungseinsatz 8 hergestellt, welcher anschließend am Kolben 7 festgelegt wird.

Die Herstellung des Verzahnungseinsatzes 8 durch Umformung erfolgt durch Ziehen, Pressen oder Prägen eines Blechs. Es kann auch eine Folge dieser Methoden angewendet werden. Bei diesen Schmiede- und Pressverfahren kann im Materialgefüge das Korn verfeinert und das Material verdichtet und somit der Werkstoff verbessert werden. Beim Fließpressen kann eine verfestigte, besonders saubere Oberfläche erzielt werden.

Mit einem nach einem dieser Umformungsverfahren hergestellten einstückigen Verzahnungseinsatz können neben geraden Verzahnungen auch weitere Verzahnungsarten, beispielsweise mit unterschiedlichen Wälzkurven oder mit variierten Flankenwinkeln für Türschließer mit unterschiedlichem Momentenverlauf, zum Einsetzten in gespritzten oder gegossenen Kolben realisiert werden.

Die Ausbildung der Verzahnung kann dabei unabhängig von spritzgusstechnischen Erfordernissen erfolgen. Für große Türen mit hohen erforderlichen Schließkräften ist darüber hinaus eine Ausbildung der Verzahnung in Metall über deren gesamte Breite zur Übertragung der großen Kräfte möglich und es kann neben der mechanischen Festigkeit eine hohe Abnutzungsbeständigkeit erreicht werden.

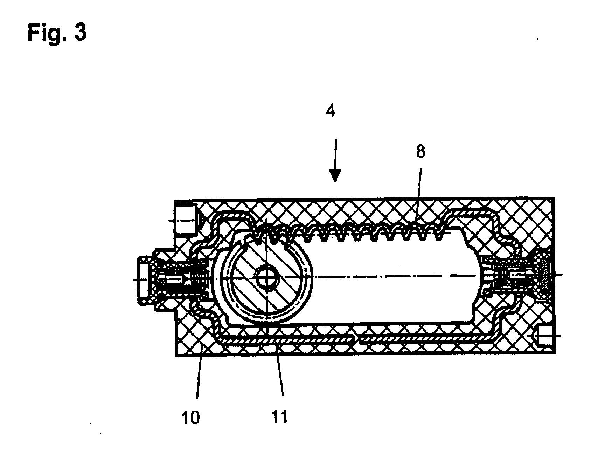

Fig. 2 und Fig.3 zeigt einen einteiligen, durch Umformung ausgebildeten Verzahnungseinsatz 8, der durch das den Kolben 7 bildende Material umgeben wird. Der Kolben 7 ist dabei durch Spritzen, Gießen oder Sintern geformt. Der Verzahnungseinsatz 8 ist aus Blech durch Ziehen, Pressen oder Prägen umgeformt.

In Fig. 2 ist ein Kolben 7 mit einem Verzahnungseinsatz 8 gezeigt, wobei die Verzahnung 9 als Wälzkurve mit entsprechendem Ritzel 6 ausgebildet ist. Vorteilhaft bei diese Ausbildung ist der, insbesondere für Türschließer 1 mit Gleitarm, angepasste Momentenverlauf. Der Verzahnungseinsatz 8 ist dabei so umgeformt, dass in Verlängerung zur Erstreckungsrichtung der Verzahnung 9 ein Materialfortsatz 11 ausgebildet ist, der durch Prägungen, Sicken, Stanzungen oder durch Bohrungen eine Fixierung des Verzahnungseinsatzes 8 in dem den Kolbenkörper 10 bildenden Material bewirkt.

In Fig. 3 ist ein weiterer Kolben 7 mit Verzahnungseinsatz 8 gezeigt, wobei die Verzahnung linear ausgebildet ist, wie sie beispielsweise für Türschließer 1 mit Gestänge verwendet wird. Dabei ist der Verzahnungseinsatz 8 so umgeformt, dass der Materialfortsatz 11 gebogen werden kann, um neben der Fixierung des Verzahnungseinsatzes 8 eine Versteifung des Kolbens 7 zu erzielen. Es ist auch möglich einen vorgeformten Materialfortsatz 11 mit dem Verzahnungseinsatz 8 zu verbinden. Dies kann beispielsweise durch Nieten, Schrauben, Bördeln oder Schweißen erfolgen.

### Liste der Referenzzeichen

- 1: Türschließer
- 2: Gehäuse
- 3: Feder, Federn
- 4: Getriebe
- 5: Welle
- 6: Ritzel
- 7: Kolben
- 8: Verzahnungseinsatz
- 9: Verzahnung
- 10: Kolbenkörper
- 11: Materialfortsatz

## Patentansprüche

1. Verfahren zur Herstellung eines Kolbens (7) mit einer Verzahnung (9) für ein Getriebe (4) eines Türschließers (1), umfassend eine Welle (5) mit einem außenverzahnten Ritzel (6) und einen in axialer Verschiebungsrichtung verzahnten Kolben (7), dessen Verzahnung (9) mit dem Ritzel (6) der Welle (5) korrespondiert, wobei
die Verzahnung (9) des durch Spritzen, Gießen oder Sintern geformten Kolbens (7) aus einem flächigen Teil durch einen in Richtung auf die Fläche eines Verzahnungseinsatzes (8) aus Blech wirkenden Umformvorgang durch Ziehen, Pressen oder Prägen hergestellt wird, wobei die Verzahnung (9) in einem Teilbereich des Verzahnungseinsatzes (8) umgeformt wird, und der Verzahnungseinsatz (8) in einen den Kolben (7) bildenden Kolbenkörper (10) eingelegt ist,
**dadurch gekennzeichnet, dass** an die Verzahnung (9) anschließend ein Materialfortsatz (11) vorgesehen ist, und der Verzahnungseinsatz (8) mit dem Materialfortsatz (11), mit dem die Verzahnung (8) am Kolben (7) festgelegt ist, vom Material des Kolbenkörpers (10) umgeben und gehalten wird, wobei der Materialfortsatz (11), der in Verlängerung zur Erstreckungsrichtung der Verzahnung (9) ausgebildet ist, durch Prägungen, Sicken, Stanzungen oder durch Bohrungen eine Fixierung des Verzahnungseinsatzes (8) in dem den Kolbenkörper (10) bildenden Material bewirkt.

2. Türschließer (1), mit einem Getriebe (4) umfassend
eine Welle (5) mit einem außenverzahnten Ritzel (6), und einen in axialer Verschiebungsrichtung verzahnten Kolben (7) mit einer Verzahnung (9), die mit dem Ritzel (6) der Welle (5) korrespondiert, wobei die Verzahnung (9) des durch Spritzen, Gießen oder Sintern geformten Kolbens (7) aus einem flächigen Teil durch einen in Richtung auf die Fläche eines einstückigen Verzahnungseinsatzes (8) aus Blech wirkenden Umformvorgang durch Ziehen, Pressen oder Prägen hergestellt und in einem Teilbereich des Verzahnungseinsatzes (8) umgeformt ist, und wobei der Verzahnungseinsatz (8) in dem den Kolben (7) bildenden Kolbenkörper (10) eingelegt ist,
**dadurch gekennzeichnet, dass** an die Verzahnung (9) anschließend ein Materialfortsatz (11) vorgesehen ist und der Verzahnungseinsatz mit dem Materialfortsatz (11), mit dem die Verzahnung (8) am Kolben (7) festgelegt ist, vom Material des Kolbenkörpers (10) umgeben und gehalten ist, wobei der in Verlängerung zur Erstreckungsrichtung der Verzahnung (9) ausgebildete Materialfortsatz (11), durch Prägungen, Sicken, Stanzungen oder durch Bohrungen eine Fixierung des Verzahnungseinsatzes (8) in dem den Kolbenkörper (10) bildenden Material bewirkt.

3. Türschließer nach Anspruch 2,
**dadurch gekennzeichnet, dass** der Materialfortsatz (11) des Verzahnungseinsatzes (8) durch Nieten, Schrauben, Bördeln oder Schweißen mit der Verzahnung (9) verbunden ist.

4. Türschließer nach Anspruch 2,
**dadurch gekennzeichnet, dass** der Materialfortsatz (11) abschnittsweise dem Materialverlauf des Kolbenkörpers (10) folgend ausgebildet ist.

## Claims

1. Method for producing a piston (7) having a toothing (9) for a gear mechanism (4) of a door closer (1), comprising a shaft (5) with an externally toothed pinion (6) and comprising a piston (7) which is toothed in an axial displacement direction, the toothing (9) of which piston corresponds to the pinion (6) of the shaft (5), wherein the toothing (9) of the piston (7) formed by injection moulding, casting or sintering is produced from a planar part by a drawing, pressing or stamping shaping process which acts in the direction of the surface of a toothing insert (8) composed of sheet metal, wherein the toothing (9) is shaped in a partial region of the toothing insert (8) and the toothing insert (8) is inlaid into a piston body (10) which forms the piston (7), **characterized in that** a material extension (11) is provided adjoining the toothing (9), and the toothing insert (8) is surrounded and held by the material of the piston body (10) at the material extension (11) by which the toothing (8) is fixed to the piston (7), wherein the material extension (11) which is formed as an elongation in the direction of extent of the toothing (9) generates, by means of stamped portions, beads, punched portions or bores, a fixing action of the toothing insert (8) in the material which forms the piston body (10).

2. Door closer (1), having a gear mechanism (4) comprising a shaft (5) with an externally toothed pinion (6) and comprising a piston (7) which is toothed in an axial displacement direction, said piston having a toothing (9) which corresponds to the pinion (6) of the shaft (5), wherein the toothing (9) of the piston (7) formed by injection moulding, casting or sintering is produced from a planar part by a drawing, pressing or stamping shaping process which acts in the direction of the surface of a single-piece toothing insert (8) composed of sheet metal, and said toothing is shaped in a partial region of the toothing insert (8), and wherein the toothing insert (8) is inlaid in the piston body (10) which forms the piston (7), **characterized in that** a material extension (11) is provided adjoining the toothing (9), and the toothing insert is surrounded and held by the material of the piston body (10) at the material extension (11) by which the toothing (8) is fixed to the piston (7), wherein the material extension (11) which is formed as an elongation in the direction of extent of the toothing (9) generates, by means of stamped portions, beads, punched portions or bores, a fixing action of the toothing insert (8) in the material which forms the piston body (10).

3. Door closer according to Claim 2,
**characterized in that** the material extension (11) of the toothing insert (8) is connected to the toothing (9) by means of rivets, by means of screws, by flanging or by welding.

4. Door closer according to Claim 2,
**characterized in that** the material extension (11) is formed in sections so as to follow the material profile of the piston body (10).

## Revendications

1. Procédé de fabrication d'un piston (7) comprenant une denture (9) pour un mécanisme (4) d'un ferme-porte (1), comprenant un arbre (5) avec un pignon à denture extérieure (6) et un piston (7) à denture dans la direction de déplacement axiale, dont la denture (9) correspond au piston (6) de l'arbre (5),
la denture (9) du piston (7) formé par injection, moulage ou frittage, étant fabriquée à partir d'une pièce plane par une opération de façonnage agissant dans la direction de la surface d'un insert de denture (8) en tôle par emboutissage, pressage ou gaufrage, la denture (9) étant façonnée dans une région partielle de l'insert de denture (8) et l'insert de denture (8) étant inséré dans un corps de piston (10) formant le piston (7),
**caractérisé en ce qu'**une saillie de matière (11) est prévue de manière à se raccorder à la denture (9), et l'insert de denture (8), avec la saillie de matière (11) avec laquelle la denture (8) est fixée au piston (7), est entouré et maintenu par le matériau du corps de piston (10), la saillie de matière (11) qui est réalisée dans le prolongement de la direction d'étendue de la denture (9), par des gaufrages, moulures, estampages ou perçages, provoquant une fixation de l'insert de denture (8) dans le matériau formant le corps de piston (10).

2. Ferme-porte (1), comprenant un mécanisme (4) comprenant
un arbre (5) avec un pignon à denture extérieure (6), et un piston (7) à denture dans la direction de déplacement axial, avec une denture (9) qui correspond au pignon (6) de l'arbre (5), la denture (9) du piston (7) formé par injection, moulage ou frittage, étant fabriquée à partir d'une pièce plane par une opération de façonnage agissant dans la direction de la surface d'un insert de denture (8) en tôle par emboutissage, pressage ou gaufrage et étant façonnée dans une région partielle de l'insert de denture (8), et l'insert de denture (8) étant inséré dans le corps de piston (10) formant le piston (7),
**caractérisé en ce qu'**une saillie de matière (11) est prévue de manière à se raccorder à la denture (9), et l'insert de denture avec la saillie de matière (11), avec laquelle la denture (8) est fixée au piston (7), est entouré et maintenu par le matériau du corps de piston (10), la saillie de matière (11) qui est réalisée dans le prolongement de la direction d'étendue de la denture (9), par des gaufrages, moulures, estampages ou perçages, provoquant une fixation de l'insert de denture (8) dans le matériau formant le corps de piston (10).

3. Ferme-porte selon la revendication 2,
**caractérisé en ce que** la saillie de matière (11) de l'insert de denture (8) est connectée par rivetage, vissage, rabattage ou soudage à la denture (9).

4. Ferme-porte selon la revendication 2,
**caractérisé en ce que** la saillie de matière (11) est réalisée en suivant en partie le contour du matériau du corps de piston (10).
